# EUROPEAN PATENT APPLICATION

(11) **EP 4 672 512 A2**
(43) Date of publication of application: **31.12.2025**
(21) Application number: 25185456.8
(22) Date of filing: 26.06.2025
(51) Int. Cl.: H01R 13/52, H01R 43/00, H01R 24/78

(54) **INGRESS PROTECTIVE SEAL**

(30) Priority: 26.06.2024 US 202418754947
(71) Applicant: CareFusion 303, Inc., San Diego, CA 92130 (US)
(72) Inventor: Greer, Warren, San Diego, 92130 (US); Mooney, Keith, San Diego, 92130 (US); Hidalgo, Ronald, San Diego, 92130 (US); Kunnampariyarathu Ashok, Abhijith, San Diego, 92130 (US)
(74) Representative: Zenz Patentanwälte Partnerschaft mbB

(57) **Abstract**

A mechanical gasket for an outlet. The mechanical gasket including a unitary gasket body configured to be disposed over and coupled to an outlet. The unitary gasket body includes a plurality of slots. The unitary gasket body has a predetermined gasket thickness and gasket dimensions that substantially corresponds to a face of the outlet, such that when an electrical pronged connector is mated with the outlet the mechanical gasket is positioned between the outlet and the electrical pronged connector. Each slot of the plurality of slots is configured align with a corresponding receptacle of the outlet and has a predetermined slot width and a predetermined slot height selected to reduce one or more opening dimensions of the corresponding receptacle for receiving a corresponding metal prong of the electrical pronged connector when the electrical pronged connector is mated with the outlet.

## Description

### FIELD OF THE INVENTION

The present disclosure generally relates to an ingress protective seal for outlets, and, in particular, mechanical gaskets that are configured to be coupled to outlets and reduce or eliminate water ingress.

### BACKGROUND

Outlets can have wide openings that increase the likelihood of water of accumulating and/or entering the outlet. The water accumulation on and/or ingress in the outlet is classified as a failure. To reduce or eliminating the failure conditions on outlets, outlets would need to be modified or replaced to reduce water ingress and accumulation. Replacement and/or modification of existing outlets is expensive and may not always be possible. As such, there is a need for a solution that can improve outlets to reduce or eliminate water accumulation and/or ingress. Additionally, there is a need tools that are able to improve the performance of existing outlets without requiring the outlet to be replaced.

As such, there is a need system and devices for applying an ingress protective seal on an outlet.

### SUMMARY

The disclosed subject matter relates to mechanical gaskets for outlets and systems for applying the mechanical gaskets to the outlet. The disclosed mechanical gaskets can reduce the opening of an outlet by a predetermined amount (e.g., reducing an opening area of an outlet by 82.18%), which reduces the chances of water gathering on the outlet and/or entering the outlet (e.g., depending on the size of a droplet a greater chance of surface tension preventing water ingress to the outlet). In some implementations, the mechanical gaskets include slots with predetermined draft angles (e.g., 3 degrees) to further reducing the chances of water entering the outlet. The mechanical gaskets have low manufacturing costs and can be used on exiting and/or new outlets to reduce or eliminate water accumulation and/or ingress. The mechanical gaskets can be added as spare parts and upgraded during maintenance periods. In accordance with some implementations, a mechanical gasket for an outlet is provided. The mechanical gasket includes a unitary gasket body configured to be disposed over and coupled to an outlet. The unitary gasket body includes a plurality of slots. The unitary gasket body has a predetermined gasket thickness and gasket dimensions that substantially corresponds to a face of the outlet, such that when an electrical pronged connector is mated with the outlet the mechanical gasket is positioned between the outlet and the electrical pronged connector without inhibiting electrical conductivity between the outlet and the electrical pronged connector. Each slot of the plurality of slots is configured align with a corresponding receptacle of the outlet and has a predetermined slot width and a predetermined slot height selected to reduce one or more opening dimensions of the corresponding receptacle for receiving a corresponding metal prong of the electrical pronged connector when the electrical pronged connector is mated with the outlet.

In accordance with some implementations, a gasket stamp press is provided. The gasket stamp press includes a plunger body and a stamp housing. The plunger body includes a plunger configured to support a mechanical gasket and couple the mechanical gasket to a face of an outlet, a plurality of spring-loaded support rods, and a stamp member coupled to the plunger and the plurality of spring-loaded support rods. The stamp housing includes a plunger channel that is configured to receive the plunger, and a plurality of rod openings that are configured to receive the plurality of spring-loaded support rods. A first end of the stamp housing is configured to contact the outlet or an outlet mount and align the outlet with the plunger channel, and a second end of the stamp housing, opposite the first end of the stamp housing, is configured to receive the plunger body. While the first end of the stamp housing contacts the outlet and/or the outlet mount, and the plunger body is disposed, at least partially, within the stamp housing, application of a force at the stamp member causes the plunger to press the mechanical gasket against the outlet such that the mechanical gasket detaches from the plunger and couples to the face of the outlet.

Note that the various implementations described above can be combined with other implementations described herein. The features and advantages described in the specification are not all inclusive and, in particular, additional features and advantages will be apparent to one of ordinary skill in the art in view of the drawings, specification, and claims. Moreover, it should be noted that the language used in the specification has been principally selected for readability and instructional purposes.

### BRIEF DESCRIPTION OF THE DRAWINGS

So that the present disclosure can be understood in greater detail, a more particular description may be had by reference to the features of various implementations, some of which are illustrated in the appended drawings. The appended drawings, however, merely illustrate pertinent features of the present disclosure. The description may admit to other effective features as the person of skill in this art will appreciate upon reading this disclosure.
FIG. 1 illustrates example system using a mechanical gasket, in accordance with some implementations.
Figures 2A and 2B illustrate an outlet, in accordance with some implementations.
FIGS. 3A-3D illustrate different views of a mechanical gasket 130, in accordance with some implementations.
FIGS. 4A-4C illustrate a mechanical gasket coupled to an outlet, in accordance with some implementations.
FIGS. 5A-5F illustrate coupling of a mechanical gasket to an outlet using a gasket stamp press, in accordance with some implementations.
FIGS. 6A and 6B illustrate a stamp housing, in accordance with some implementations.
FIGS. 7A-7C illustrate a plunger body, in accordance with some implementations.

In accordance with common practice, the various features illustrated in the drawings are not drawn to scale. Accordingly, the dimensions of the various features may be arbitrarily expanded or reduced for clarity. In addition, some of the drawings may not depict all of the components of a given system, method or device. Finally, like reference numerals denote like features throughout the specification and figures.

### DETAILED DESCRIPTION

Numerous details are described herein in order to provide a thorough understanding of the example implementations illustrated in the accompanying drawings. However, some implementations may be practiced without many of the specific details, and the scope of the claims is only limited by those features and aspects specifically recited in the claims. Furthermore, well-known processes, components, and materials have not been described in exhaustive detail so as to avoid obscuring pertinent aspects of the implementations described herein.

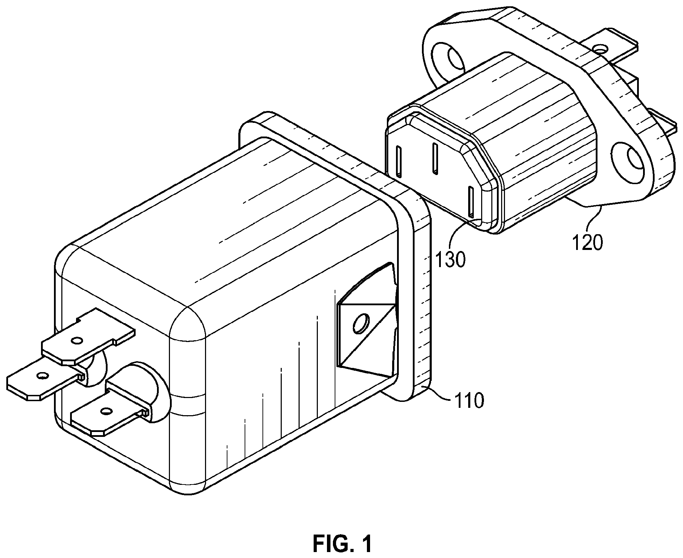

FIG. 1 illustrates example system using a mechanical gasket, in accordance with some implementations. The mechanical gasket 130 is coupled to a (mains) outlet 120, which is configured to couple to a (mains or electrical) pronged connector 110 (or electrical plug). The outlet 120 can be any type socketed or slotted electrical connector, such as a C13 connector; a C19 connector; a C15 connector; a C21 connector; and/or any type of socketed and/or slotted electrical connector identified by the International Electrotechnical Commission (EIC), the National Electrical Code (NEC), or other electrical standards. The pronged connector 110 can be any type of electrical plug or electrical pinned connector, such as a C14 connector; a C20 connector; a C16 connector; a C22 connector; and/or any type of pinned and/or pronged electrical connector identified by the EIC, the NEC, or other electrical standards. The above examples are non-exhaustive and, as would be readily apparent to those skilled in the art, mechanical gasket 130 can be used with any socketed and/or slotted electrical connector and/or pinned and/or pronged electrical connector. The outlet 120 can be part of an electronic device, such as a medical device, a computing device, etc. Alternatively, in some implementations, the outlet 120 is part of a structure such as a building, coupled to a desk, a floor, etc.

The mechanical gasket 130 is configured to be disposed over and coupled to the outlet 120. The mechanical gasket 130 is configured to reduce or eliminate the water ingress into the outlet 120. The mechanical gasket 130 can further increase the chance of surface tension with water (depending on the size of the droplets), which prevents water ingress to the outlet 120. The mechanical gasket 130 can have (or include materials having) hydrophobic properties to allow the mechanical gasket 130 to repel water and protect underlying materials and/or surfaces without restricting breathability. Additionally, the mechanical gasket 130 reduce or eliminate the accumulation of water on the outlet 120.

The mechanical gasket 130 is fabricated such that it remains soft and pliable throughout its lifetime without fatiguing, hardening, cracking, or requiring plasticizers. The mechanical gasket 130 is also configured to undergo repeated loading and/or unloading. As described above, the mechanical gasket 130 is configured to repel water to protect underlying materials without restricting breathability. The mechanical gasket 130 is configured to resists degradation caused by UV radiation, chemical exposure, and poor environmental conditions (e.g., the mechanical gasket 130 is configured to be resistant to aging). The mechanical gasket 130 is further configured to be highly insulative electrically and can be filled with conductive fillers to achieve very low resistance (which, in some implementations, allows the mechanical gasket 130 to be used on electronic devices to provide electromagnetic interference (EMI) and/or radio frequency interference (RFI) shielding). Additionally, the mechanical gasket 130 is configured to be inert such that it does not react with many chemicals (e.g., the mechanical gasket 130 only reacts to limited substances, such as strong acids, strong bases, and/or nonpolar organic compounds, which can damage or deform the mechanical gasket 130) or biological elements (e.g., the mechanical gasket 130 does not participate in biological processes, which allows the mechanical gasket 130 to be safe for human contact and/or be used with food products). In some implementations, the mechanical gasket 130 is formed of one or more silicone polymers, which can have high tensile strength and extreme low and high temperature performance of between -75° C up to 220° C, and allows the mechanical gasket 130 to handle the stresses required to expand and contract repeatedly. Moreover, the mechanical gasket 130 is relatively cheap to make and can be used to retrofit and/or upgrade existing outlets, and/or added as a spare part and/or upgraded in the maintenance periods.

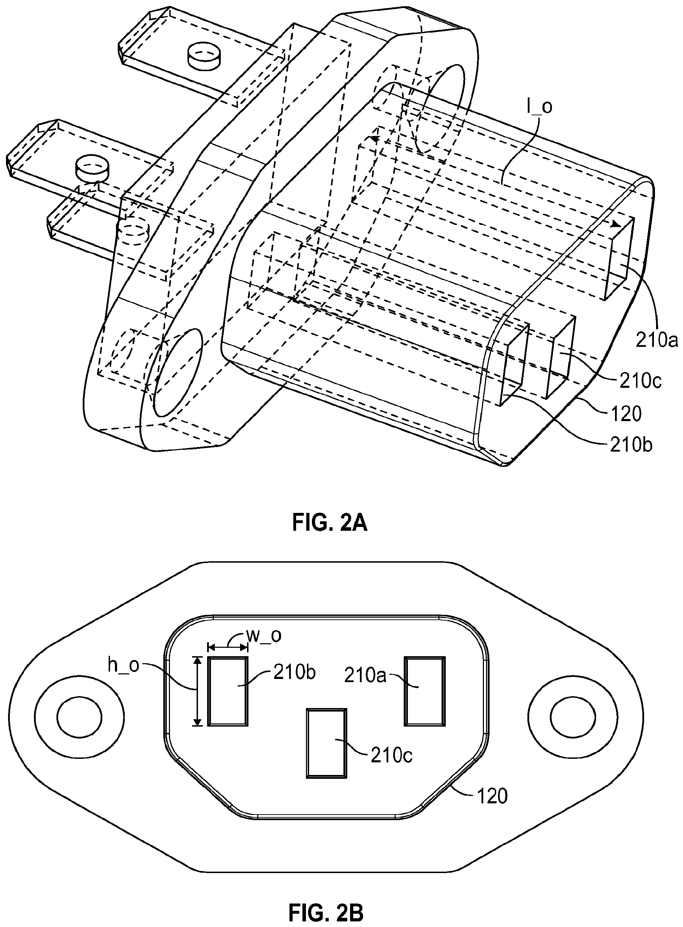

Figures 2A and 2B illustrate an outlet, in accordance with some implementations. Figure 2A provides a perspective view of the outlet 120. In some implementations, the outlet 120 includes a plurality of receptacles 210. Each of the plurality of receptacles 210 is configured to receive a pin or prong of a pronged connector 110.

Figure 2B shows a front face of the outlet 120 and the plurality of receptacles 210. The outlet 120 can include any number of receptacles (or openings) as defined by the EIC, the NEC, or any other electrical standards. Each receptacle of the plurality of receptacles 210 has predetermined opening dimensions (e.g., a predetermined outlet length (l_o), a predetermined outlet height (h_o), and a predetermined outlet width (w_o)) as defined by the EIC, the NEC, or any other electrical standards. The predetermined opening dimensions of each receptacle of the plurality of receptacles 210 correspond to predetermined prong dimensions of a pronged connector 110 (Figure 1) counterpart. For example, an example C13 outlet can have a predetermined outlet height of 5.32 mm, a predetermined outlet width (w_o) of 2.82 mm, and a predetermined outlet length 18 mm; and a corresponding C14 pronged connector can have a first predetermined pin length of 15 mm (e.g., for a ground pin), a second predetermined pin length of 12.5 mm (e.g., for live and neutral pins), a predetermined pin height of 4 mm, and a predetermined pin width of 1.95 mm (at the widest portion). The predetermined opening dimensions of each receptacle of the plurality of receptacles 210 of the outlet 120 and the predetermined prong dimensions of the prongs (or pins) of the pronged connector 110 are based on particular pronged connector and outlet used and can vary depending on the implementation. The predetermined opening dimensions of each receptacle of the plurality of receptacles 210 can be the same or distinct.

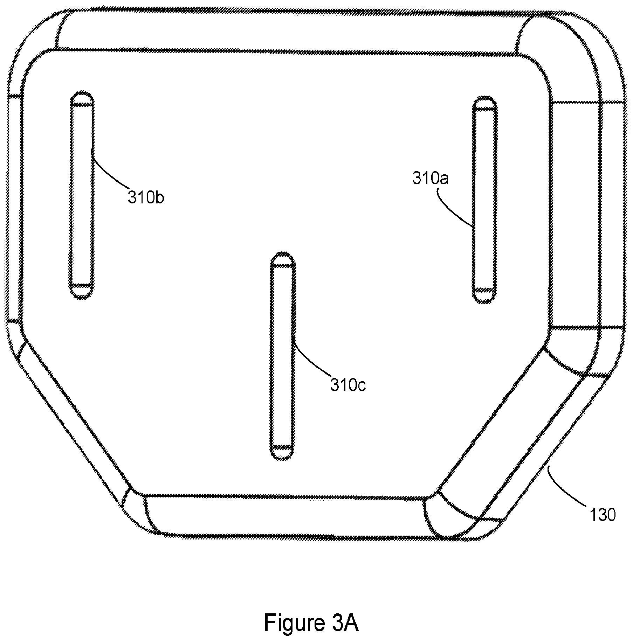

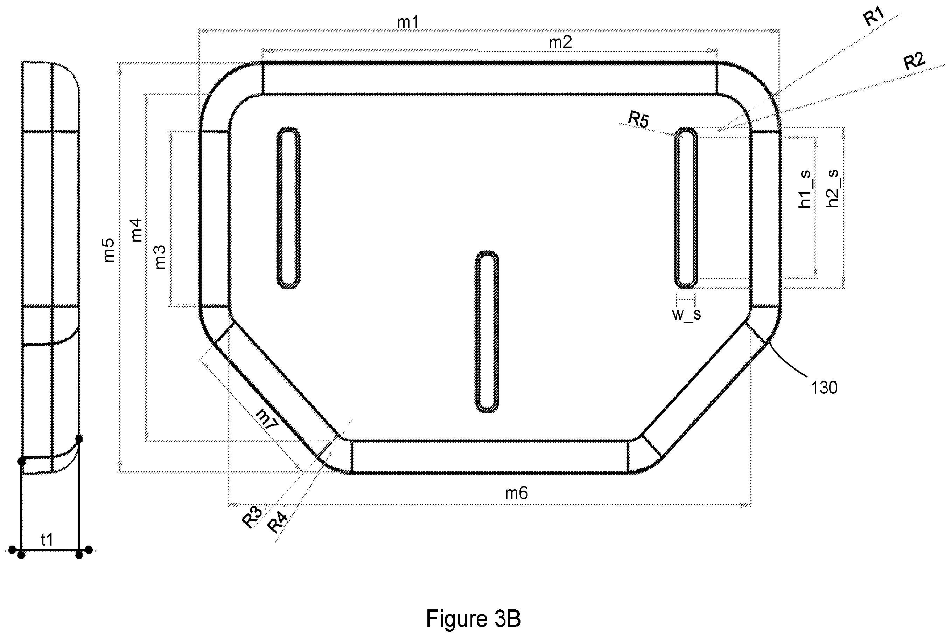

FIGS. 3A-3D illustrate different views of a mechanical gasket 130, in accordance with some implementations. FIG. 3A shows a perspective view of the mechanical gasket 130. The mechanical gasket 130 includes a plurality of slots 310 with predetermined slot dimension (discussed below in reference to FIG. 3B). The plurality of slots 310 are configured to align with a plurality of receptacles 210 of an outlet 120 (FIGS. 1-2B) such that when the mechanical gasket 130 is disposed over the outlet 120, each slot of the plurality of slots 310 is aligned with and covers a portion of a respective receptacle of the plurality of receptacles 210. For example, a first slot 310a is configured to align with and cover a first receptacle 210a, a second slot 310b is configured to align with and cover a second receptacle 210b, and a third slot 310c is configured to align with and cover a third receptacle 210c.

FIG. 3B illustrates a front view of the mechanical gasket 130 and predetermined gasket dimensions of the mechanical gasket 130. The mechanical gasket 130 can have predetermined gasket dimensions based on the outlet on which it is to be disposed over. The mechanical gasket 130 is configured to cover a front face of an outlet and a predetermined amount of each receptacle of the plurality of receptacles 210 of the outlet. **In** other words, mechanical gasket 130 (e.g., its unitary gasket body) has a predetermined gasket thickness and predetermined gasket dimensions that substantially corresponds to a face of the outlet, such that, when an electrical pronged connector is mated with the outlet, the mechanical gasket 130 is positioned between the outlet and the electrical pronged connector (without inhibiting electrical conductivity between the outlet and the electrical pronged connector). As described below, each slot of the plurality of slots 310 of the mechanical gasket 130 is configured align with a corresponding receptacle of the outlet; and has a predetermined slot width and a predetermined slot height selected to reduce one or more opening dimensions of the corresponding receptacle for receiving a corresponding metal prong of the electrical pronged connector when the electrical pronged connector is mated with the outlet. In some implementations, each slot of the mechanical gasket 130 reduces the opening dimensions of the corresponding receptacle by at least 70%, by at least 80%, by at least 85%, or by at least 90%.

The predetermined gasket dimensions of the mechanical gasket 130 are defined such that the mechanical gasket 130 has a unitary gasket body (and/or gasket dimensions) that substantially corresponds to a face of an outlet. In this way, when an electrical pronged connector is mated with the outlet the mechanical gasket 130 is positioned between the outlet and an electrical pronged connector without inhibiting electrical conductivity between the outlet and the electrical pronged connector. As described below, the mechanical gasket 130 reduces one or more opening dimensions of a corresponding receptacle for receiving a corresponding metal prong of an electrical pronged connector when the electrical pronged connector is mated with the outlet. This allows the mechanical gasket 130 to snugly receive an electrical pronged connector (e.g., receive corresponding metal prongs of the electrical pronged connector such that there is no distance or a substantially zero distance between the corresponding metal prongs of the electrical pronged connector and the slots 310 of the mechanical gasket 130 (e.g., the electrical pronged connectors and the plurality of slots 310 are in contact or substantially in contact)).

Predetermined gasket dimensions of the mechanical gasket 130 can include predetermined perimeter dimension m1, m2, m3, m4, m5, m6, m7, r1, r2, r3, and r4 that outline and/or are similar to dimensions of the outlet 120. For example, for a C13 outlet, a mechanical gasket 130 can have the following dimensions: an m1 length equal to 20.44 mm, an m2 length equal to 16 mm, an m3 length equal to 5.66 mm, an m4 length equal to 11.19 mm, an m5 length equal to 13.19 mm, an m6 length equal to 18.39 mm, an m7 length equal to 5.15 mm, an r1 defined radius equal to 2.19, an r2 defined radius equal to 1.19, an r3 defined radius equal to 0.69, and an r4 defined radius equal to 1.69. The predetermined perimeter dimension of the mechanical gasket 130 can be adjusted to fit a particular outlet and outlet shape, which allows the mechanical gasket 130 to provide an ingress protective seal to the outlet. The mechanical gasket 130 has a predetermined thickness t1. The thickness for the mechanical gasket 130 can be based on a desired lifespan for the mechanical gasket 130, the dimensions of the outlet, and/or other properties desired from the mechanical gasket 130. In some implementations, the thickness, t1, of the mechanical gasket 130 is 2.00 mm. In some implementations, the thickness, t1, of the mechanical gasket 130 is no greater than 2.00 mm.

Each slot of the plurality of slots 310 has predetermined slot dimensions. The predetermined slot dimensions are based on the dimensions of the outlet 120 (e.g., the position and size of the plurality of receptacles 210). As described above, the plurality of slots 310 are configured to substantially reduce opening dimensions and/or an area of respective areas of the plurality of receptacles 210. The predetermined slot dimensions include a predetermined inner slot height h1_s, a predetermined outer slot height h2_s, a predetermined slot width w_s, and a predetermined slot radius r5. For example, for a C13 outlet, the plurality of slots 310 can have the following dimensions: a predetermined inner slot height h1_s equal to 4.56 mm, a predetermined outer slot height h2_s equal to 5.16, a predetermined slot width w_s equal to 0.54 mm, and a predetermined slot radius r5 equal to a defined radius of 0.20. In some implementations the predetermined inner slot height h1_s and the predetermined outer slot height h2_s are a single predetermined slot height. In some implementations, for a C13 outlet, the plurality of slots 310 can have the following dimensions: a single predetermined slot height equal to 4.95 mm and a predetermined slot width w_s equal to 0.54 mm. In some implementations, the plurality of slots 310 narrows as it traverses the unitary gasket body according to a predetermined draft angle , which further reduces or eliminates the risk of water entering an outlet. In some implementations, the predetermined draft angle is 3 degrees. In some implementations, each slot of the plurality of slots 310 can have the same or distinct dimensions.

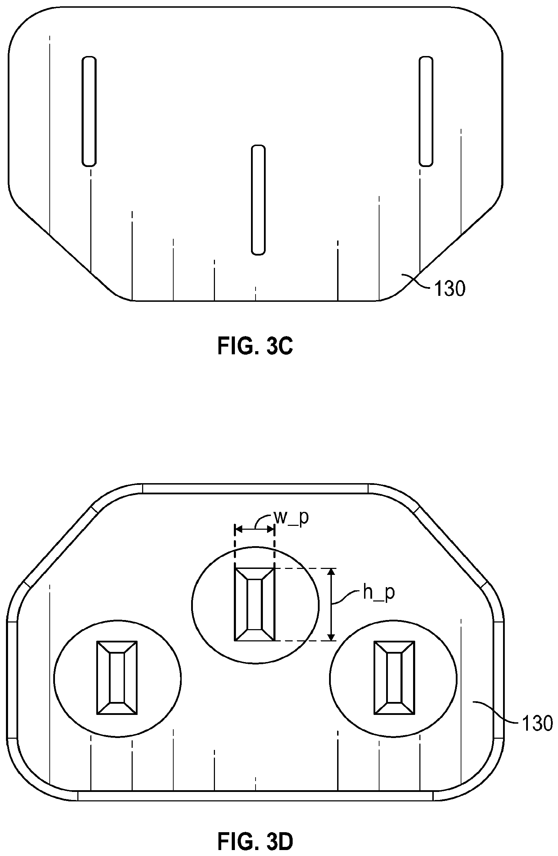

FIG. 3C illustrates a rear or back view of the mechanical gasket 130 and FIG. 3D illustrates clearance of one or more pins or prongs of a pronged connector 110 (FIG. 1). As described above in reference to FIG. 2B, the pronged connector 110 can include predetermined prong dimensions, such as a predetermined prong height h_p, a predetermined prong width w_p, and a predetermined prong length. Each prong of the pronged connector 110 can have the same or distinct dimensions. For example, a ground prong can be longer than a live and/or neutral prong. In some implementations, the height and/or width of a prong changes based on a length of a prong. For example, a prong can have a wider base and a narrower tip portion (e.g., at a distal portion of the length). The dimensions of the pronged connector 110 and its corresponding predetermined prong dimensions are based on the counterpart outlet. Example dimensions for a C14 pronged connector are provided above in reference to FIG. 2B.

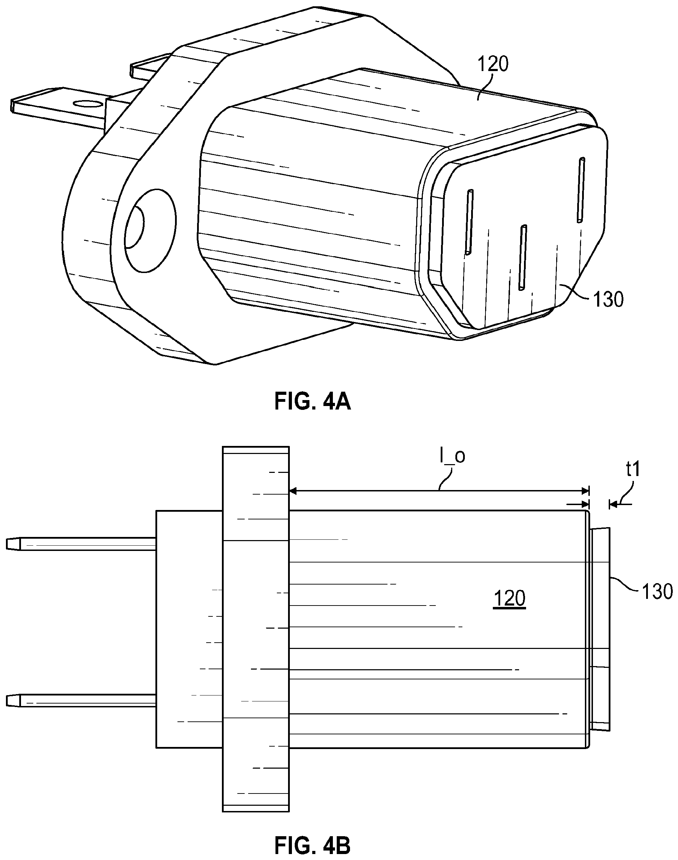

FIGS. 4A-4C illustrate a mechanical gasket coupled to an outlet, in accordance with some implementations. The mechanical gasket 130 coupled to a front face of the outlet 120. The mechanical gasket 130 is configured to couple to the front face via a pressure sensitive adhesive. In some implementations, the pressure sensitive adhesive is a silicone pressure sensitive self-adhesive. The silicone pressure sensitive self-adhesive can have a backing rated for at least 100° C.

The plurality of slots 310 (FIGS. 3A-3D) of the mechanical gasket 130 are configured to align with a plurality of receptacles 210 (FIGS. 2A and 2B) of the outlet 120 such that, when the mechanical gasket 130 is coupled to the outlet 120, the plurality of slots 310 cover the plurality of receptacles 210. The plurality of slots 310 do not prevent or restrict a pronged connector 110 (FIG. 1) from coupling with the outlet 120. The plurality of slots 310 are configured to reduce an open area of the respective receptacles of the plurality of receptacles 210. For example, a receptacle area (e.g., a predetermined outlet height (h_o) by a predetermined outlet width (w_o)) can be substantially reduced by a slot of the plurality of slots 310.

As shown in FIG. 3D, in some implementations, each slot of the plurality of slots narrows as it traverses the unitary gasket body according to a predetermined draft angle. In some implementations, each slot of the mechanical gasket reduces the opening dimensions of the corresponding receptacle to a percentage of the opening dimensions (e.g., to at least 80 percent). In this regard, when a pronged connector is mated with the outlet to which the mechanical gasket is attached, the prongs of the pronged connector will more snugly couple to the mechanical gasket via the reduced opening dimensions provided by the slots.

FIG. 4B shows a side view of the mechanical gasket 130 coupled to the outlet 120. The mechanical gasket 130 increases a length of a predetermined outlet length (l_o) by the thickness (t1) of the mechanical gasket 130.

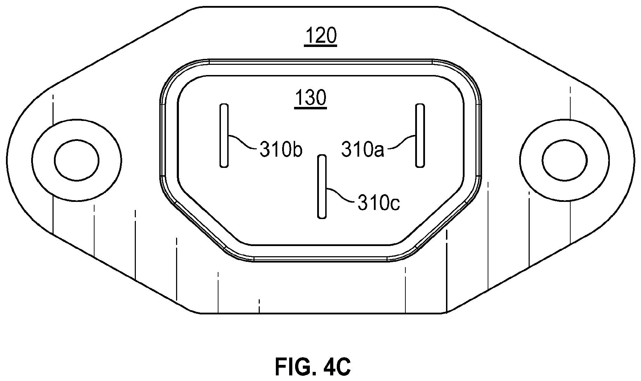

FIG. 4C shows a front facing view of the mechanical gasket 130 coupled to the outlet 120. The mechanical gasket 130 substantially covers the front face of the outlet 120. Each of the plurality of receptacles 210 are covered by the plurality of slots 310. Each slot of the plurality of slots 310 // reduces the opening dimensions of the corresponding receptacle by at least by at least 70%, by at least 80%, by at least 85%.

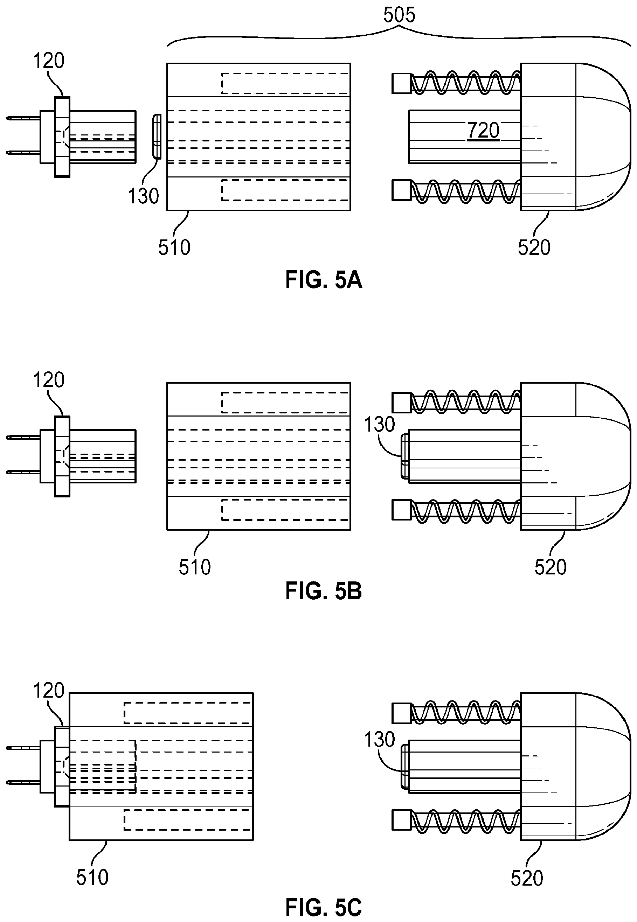

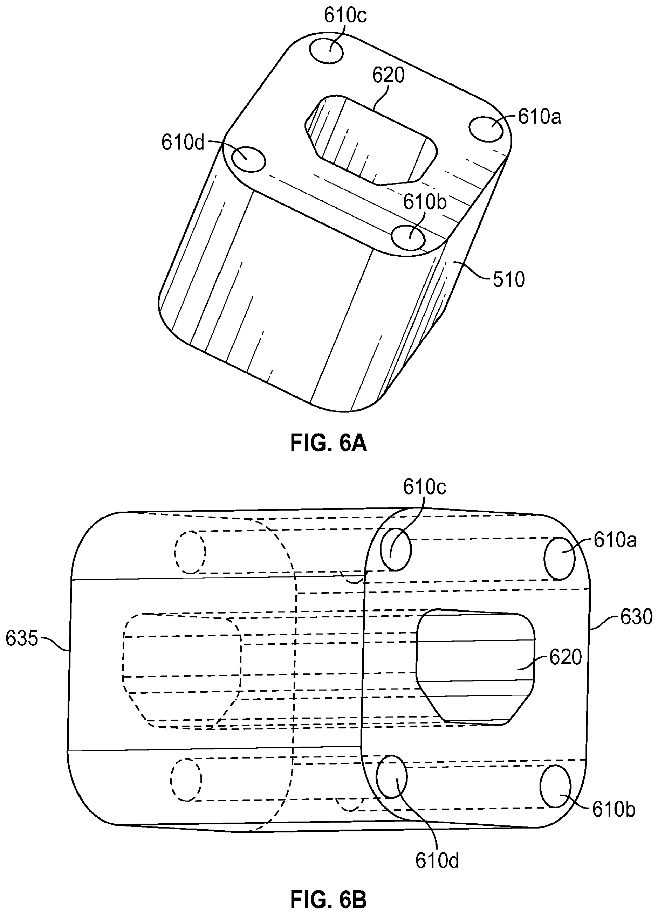

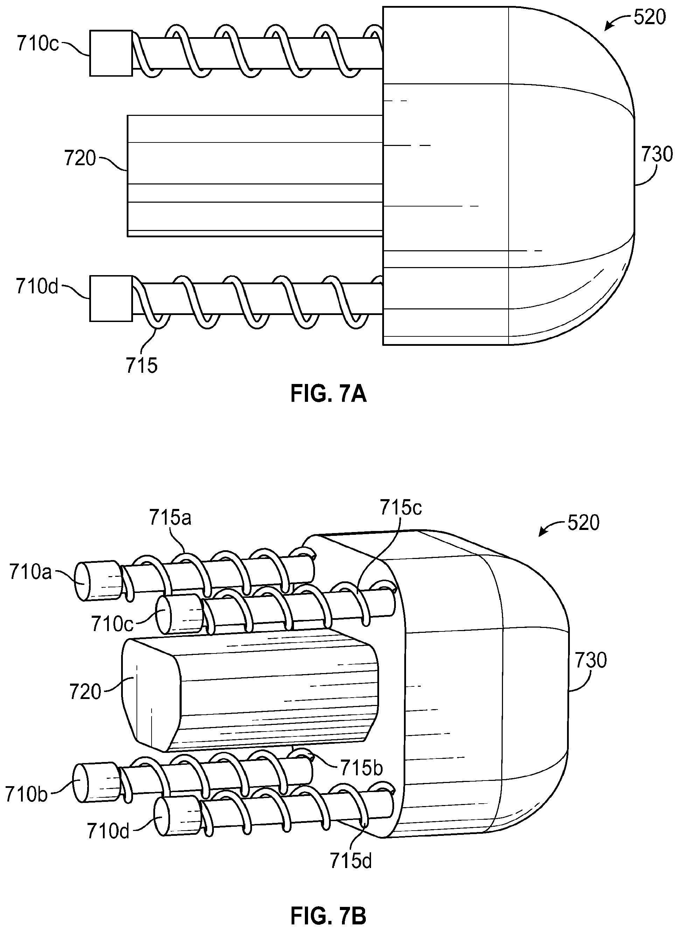

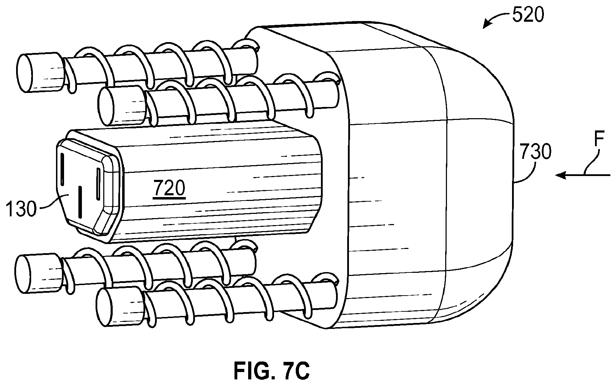

FIGS. 5A-5F illustrate coupling of a mechanical gasket to an outlet using a gasket stamp press, in accordance with some implementations. FIG. 5A shows an exploded view of the gasket stamp press 505. The gasket stamp press 505 is used to couple the mechanical gasket 130 to the outlet. The gasket stamp press 505 includes a stamp housing 510 and a plunger body 520. The stamp housing 510 includes a plunger channel 620 (FIGS. 6A and 6B) for guiding a plunger 720 (FIGS. 7A-7C) of the plunger body 520 to the outlet 120. The stamp housing 510 is configured to contact a portion of the outlet 120 such that the outlet 120 is aligned with the plunger channel 620. The stamp housing 510 is further configured to receive the plunger body 520 for pressing the mechanical gasket 130 against the outlet 120. More specifically, the gasket stamp press 505 transfers a force (applied to a portion of the plunger body 520) to the mechanical gasket 130 and presses the mechanical gasket 130 against the outlet 120. The force pressing the mechanical gasket 130 against the outlet 120 couples the mechanical gasket 130 to the outlet 120 via a pressure sensitive adhesive.

FIG. 5B shows the mechanical gasket 130 (temporarily) attached to a portion of the plunger body 520 (e.g., a plunger 720). FIG. 5C shows the stamp housing 510 disposed over the outlet 120. As described above, a plunger channel 620 of the stamp housing 510 is aligned with the outlet 120 and is configured to guide the plunger 720 to the outlet.

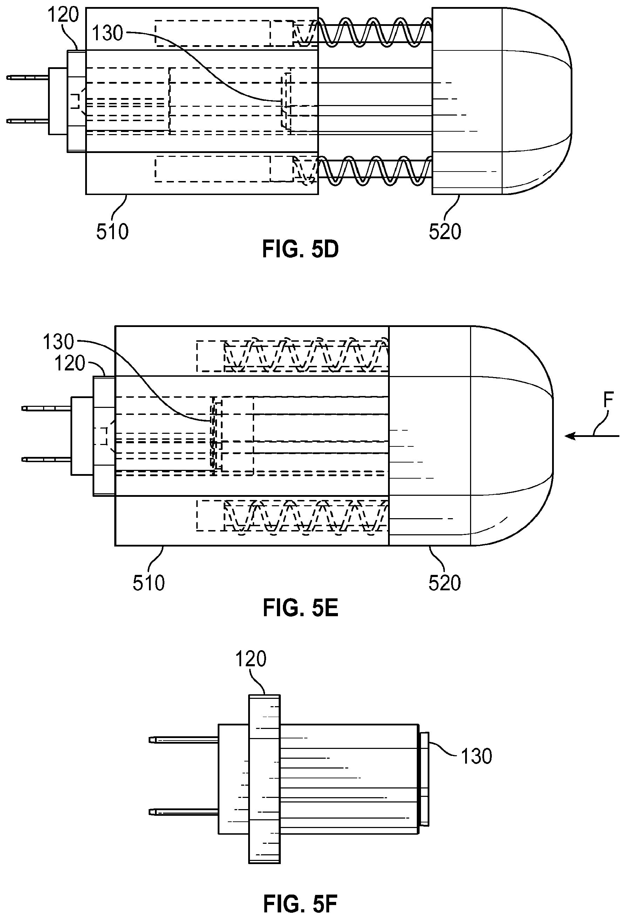

FIG. 5D shows the plunger body 520 received by the stamp housing 510. In particular, the plunger body 520 includes a plurality of spring-loaded support rods 710 (FIGS. 7A-7C) that are configured to be received by a plurality of rod openings 610 of the stamp housing 510.

FIG. 5E shows a force (F) applied to the plunger body 520 (e.g., at a stamp member 730; FIGS. 7A-7C). The force causes the plunger body 520 to travel along the stamp housing 510 and press the mechanical gasket 130 against the outlet 120. Specifically, the plunger 720 travels along the plunger channel 620 and the plurality of spring-loaded support rods 710 travel through the plurality of rod openings 610. The plurality of rod openings 610 control and stabilize movement of the plunger body 520 such that an equal and constant force can be applied to the mechanical gasket 130 and the outlet 120.

The force applied to the plunger body 520 causes a pressure sensitive adhesive on the mechanical gasket 130 to couple the mechanical gasket 130 to the outlet 120. When the mechanical gasket 130 is pressed against the outlet 120, the mechanical gasket 130 detaches from the plunger 720. After the force is removed from the plunger body 520, the plurality of spring-loaded support rods 710 separate the plunger body 520 (and the plunger 720) from the outlet 120.

FIG. 5F shows the mechanical gasket 130 coupled to the outlet 120 after the gasket stamp press 505 has been removed. The gasket stamp press 505 can be configured to work with any type of outlet and can be used to retrofit, maintain, or upgrade existing outlets. The gasket stamp press 505 can be used on outlets coupled to a structure or a device.

FIGS. 6A and 6B illustrate a stamp housing, in accordance with some implementations. The stamp housing 510 includes a plunger channel 620 and a plurality of rod openings 610. The plunger channel 620 extends a length of the stamp housing 510 such that a plunger 720 of a plunger body 520 (FIGS. 7A-7C) can travel from a second end 630 of the stamp housing 510 to a first end 635 of the stamp housing 510. The plunger channel 620 has dimensions that are greater than or equal to dimension of the outlet 120 and/or dimensions that are greater than or equal to dimension of an outline of the outlet 120. The first end 635 of the stamp housing 510 is configured to contact an outlet 120 (FIG. 1) or an outlet mount, as well as align the outlet 120 with the plunger channel 620. The second end 630 of the stamp housing 510 is configured to receive the plunger body 520. In particular, the second end 630 of the stamp housing 510 includes the plurality of rod openings 610 and the plurality of rod openings 610 can receive the plurality of spring-loaded support rods 710 (FIGS. 7A-7C). The plurality of rod openings 610 extend a partial length of the stamp housing 510. In this way, the plurality of spring-loaded support rods 710 have a surface within the stamp housing 510 on which to press against.

FIGS. 7A-7C illustrate a plunger body, in accordance with some implementations. The plunger body 520 includes a plunger 720 configured to support mechanical gasket 130 (FIG. 1) and couple the mechanical gasket 130 to an outlet 120 (FIG. 1), a plurality of spring-loaded support rods 710, and a stamp member 730 coupled to the plunger 710 and the plurality of spring-loaded support rods 710. Each support rod 710a-710d of the plurality of spring-loaded support rods 710 includes a respective spring element 715a-715d. The spring elements 715 have a predetermined spring constant to allow the plunger 720 to rebound after a force (F) is applied to the stamp member 730. In particular, the spring element 715 had a spring element that causes the stamp member 730 to rebound from a compressed position, while the force is applied (e.g., as shown in Figure 5E) to an uncompressed position, when the force is removed (e.g., as shown in Figure 5D). The plunger 720 has a first length and the plurality of spring-loaded support rods 710 is a second length. In some implementations, the first length of the plunger 720 is less than or equal to the second length of the plurality of spring-loaded support rods 710.

The plunger 720 includes a surface area substantially similar to dimensions of the mechanical gasket 130. In this way, the mechanical gasket 130 can rest uniformly on the plunger 720. The plunger 720 is substantially rigid such that a constant force is used to press the mechanical gasket 130 against the outlet 120.

The stamp member 730 is configured to receive a force from a user or another device. The force against the stamp member 730 pushes the mechanical gasket 130 against the outlet 120 such that a pressure sensitive adhesive of the mechanical gasket 130 coupled the mechanical gasket 130 to the outlet 120. After a force is removed from the stamp member 730, the plurality of spring-loaded support rods 710 return the stamp member 730 to its original position. In some implementations, the stamp member 730 is a hand member (e.g., a portion of gasket stamp press that can be adjusted by a hand of the user (or other portion of the user's body)).

### Illustration of Subject Technology as Clauses:

Various examples of aspects of the disclosure are described as numbered clauses (1, 2, 3, etc.) for convenience. These are provided as examples, and do not limit the subject technology. Identifications of the figures and reference numbers are provided below merely as examples and for illustrative purposes, and the clauses are not limited by those identifications.

Clause 1. A mechanical gasket for an outlet. The mechanical gasket includes a unitary gasket body configured to be disposed over and coupled to an outlet. The unitary gasket body includes a plurality of slots. The unitary gasket body has a predetermined gasket thickness and gasket dimensions that substantially correspond to a face of the outlet, such that when an electrical pronged connector is mated with the outlet the mechanical gasket is positioned between the outlet and the electrical pronged connector without inhibiting electrical conductivity between the outlet and the electrical pronged connector. Each slot of the plurality of slots is configured to align with a corresponding receptacle of the outlet and has a predetermined slot width and a predetermined slot height selected to reduce one or more opening dimensions of the corresponding receptacle for receiving a corresponding metal prong of the electrical pronged connector when the electrical pronged connector is mated with the outlet.

Clause 2. The mechanical gasket of Clause 1, the predetermined gasket thickness is less than or equal to 2 millimeters.

Clause 3. The mechanical gasket of any of Clause 1 through Clause 2, the predetermined slot width is less than or equal to 0.6 millimeters and the predetermined slot height is less than or equal to 5 millimeters.

Clause 4. The mechanical gasket of any of Clause 1 through Clause 3, each slot of the plurality of slots narrows as it traverses the unitary gasket body according to a predetermined draft angle.

Clause 5. The mechanical gasket of any of Clause 1 through Clause 4, the unitary gasket body couples to the outlet via an adhesive.

Clause 6. The mechanical gasket of any of Clause 1 through Clause 5, each slot of the mechanical gasket reduces the opening dimensions of the corresponding receptacle by at least 80 percent (of its original opening dimensions).

Clause 7. The mechanical gasket of any of Clause 1 through Clause 6, the unitary gasket body is formed using silicone.

Clause 8. The mechanical gasket of any of Clause 1 through Clause 7, the mechanical gasket is inert such that the mechanical gasket i) is only damaged when in contact with strong bases or strong acids and/or ii) does not participate in biological processes when in human contact.

Clause 9. The mechanical gasket of any of Clause 1 through Clause 8, the mechanical gasket is electrically insulative.

Clause 10. The mechanical gasket of any of Clause 1 through Clause 9, the mechanical gasket includes hydrophobic properties.

Clause 11. A gasket stamp press. The gasket stamp press includes a plunger body and a stamp housing. The plunger body includes a plunger configured to support a mechanical gasket and couple the mechanical gasket to a face of an outlet, a plurality of spring-loaded support rods, and a stamp member coupled to the plunger and the plurality of spring-loaded support rods. The stamp housing includes a plunger channel that is configured to receive the plunger, and a plurality of rod openings that are configured to receive the plurality of spring-loaded support rods. A first end of the stamp housing is configured to contact the outlet or an outlet mount and align the outlet with the plunger channel, and a second end of the stamp housing, opposite the first end of the stamp housing, is configured to receive the plunger body. While the first end of the stamp housing contacts the outlet and/or the outlet mount, and the plunger body is disposed, at least partially, within the stamp housing, application of a force at the stamp member causes the plunger to press the mechanical gasket against the outlet such that the mechanical gasket detaches from the plunger and couples to the face of the outlet.

Clause 12. The gasket stamp press of Clause 11, when the force at the stamp member is removed, the plurality of spring-loaded support rods separate the plunger from the outlet.

Clause 13. The gasket stamp press of any of Clause 11 through Clause 12, the plunger channel has channel dimensions that are greater than or equal to an outline of the outlet.

Clause 14. The gasket stamp press of any of Clause 11 through Clause 13, the plunger is a first length, and the plurality of spring-loaded support rods is a second length.

Clause 15. The gasket stamp press of any of Clause 11 through Clause 14, the plunger has a surface area substantially similar to dimensions of the mechanical gasket.

Clause 16. The gasket stamp press of any of Clause 11 through Clause 15, each support rod of the plurality of spring-loaded support rods includes a spring element.

Clause 17. The gasket stamp press of Clause 16, the spring element has a predetermined spring constant for returning the stamp member from a compressed position, while the force is applied, to an uncompressed position, when the force is removed.

Clause 18. The gasket stamp press of any of Clause 11 through Clause 17, the stamp member is a hand member.

Clause 19. The gasket stamp press of any of Clause 11 through Clause 17, the mechanical gasket includes a unitary gasket body configured to be disposed over and coupled to an outlet, the unitary gasket body including a plurality of slots. The unitary gasket body has a predetermined gasket thickness and gasket dimensions that substantially corresponds to a face of the outlet, such that when an electrical pronged connector is mated with the outlet the mechanical gasket is positioned between the outlet and the electrical pronged connector without inhibiting electrical conductivity between the outlet and the electrical pronged connector.

Clause 20. The gasket stamp press of Clause 19, each slot of the plurality of slots of the mechanical gasket is configured align with a corresponding receptacle of the outlet, and has a predetermined slot width and a predetermined slot height selected to reduce one or more opening dimensions of the corresponding receptacle for receiving a corresponding metal prong of the electrical pronged connector when the electrical pronged connector is mated with the outlet.

### Further Consideration:

In some implementations, any of the clauses herein may depend from any one of the independent clauses or any one of the dependent clauses. In one aspect, any of the clauses (e.g., dependent or independent clauses) may be combined with any other one or more clauses (e.g., dependent or independent clauses). In one aspect, a claim may include some or all of the words (e.g., steps, operations, means or components) recited in a clause, a sentence, a phrase or a paragraph. In one aspect, a claim may include some or all of the words recited in one or more clauses, sentences, phrases or paragraphs. In one aspect, some of the words in each of the clauses, sentences, phrases or paragraphs may be removed. In one aspect, additional words or elements may be added to a clause, a sentence, a phrase or a paragraph. In one aspect, the subject technology may be implemented without utilizing some of the components, elements, functions or operations described herein. In one aspect, the subject technology may be implemented utilizing additional components, elements, functions or operations.

The present disclosure is provided to enable any person skilled in the art to practice the various aspects described herein. The disclosure provides various examples of the subject technology, and the subject technology is not limited to these examples. Various modifications to these aspects will be readily apparent to those skilled in the art, and the generic principles defined herein may be applied to other aspects.

It will be understood that, although the terms "first," "second," etc. may be used herein to describe various elements, these elements should not be limited by these terms. These terms are only used to distinguish one element from another. Terms such as "top," "bottom," "front," "rear" and the like if used in this disclosure should be understood as referring to an arbitrary frame of reference, rather than to the ordinary gravitational frame of reference. Thus, a top surface, a bottom surface, a front surface, and a rear surface may extend upwardly, downwardly, diagonally, or horizontally in a gravitational frame of reference.

The terminology used herein is for the purpose of describing particular implementations only and is not intended to be limiting of the claims. As used in the description of the implementations and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

The word "exemplary" is used herein to mean "serving as an example or illustration." Any aspect or design described herein as "exemplary" is not necessarily to be construed as preferred or advantageous over other aspects or designs. In one aspect, various alternative configurations and operations described herein may be considered to be at least equivalent.

A phrase such as an "aspect" does not imply that such aspect is essential to the subject technology or that such aspect applies to all configurations of the subject technology. A disclosure relating to an aspect may apply to all configurations, or one or more configurations. An aspect may provide one or more examples. A phrase such as an aspect may refer to one or more aspects and vice versa. A phrase such as an "implementation" does not imply that such implementation is essential to the subject technology or that such implementation applies to all configurations of the subject technology. A disclosure relating to an implementation may apply to all implementations, or one or more implementations. An implementation may provide one or more examples. A phrase such an implementation may refer to one or more implementations and vice versa. A phrase such as a "configuration" does not imply that such configuration is essential to the subject technology or that such configuration applies to all configurations of the subject technology. A disclosure relating to a configuration may apply to all configurations, or one or more configurations. A configuration may provide one or more examples. A phrase such a configuration may refer to one or more configurations and vice versa.

In one aspect, unless otherwise stated, all measurements, values, ratings, positions, magnitudes, sizes, and other specifications that are set forth in this specification, including in the claims that follow, are approximate, not exact. In one aspect, they are intended to have a reasonable range that is consistent with the functions to which they relate and with what is customary in the art to which they pertain.

In one aspect, the term "coupled" or the like may refer to being directly coupled. In another aspect, the term "coupled" or the like may refer to being indirectly coupled.

Various items may be arranged differently (e.g., arranged in a different order, or partitioned in a different way) all without departing from the scope of the subject technology. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112, sixth paragraph, unless the element is expressly recited using the phrase "means for" or, in the case of a method claim, the element is recited using the phrase "step for." Furthermore, to the extent that the term "include," "have," or the like is used, such term is intended to be inclusive in a manner similar to the term "comprise" as "comprise" is interpreted when employed as a transitional word in a claim.

The Title, Background, Summary, Brief Description of the Drawings and Abstract of the disclosure are hereby incorporated into the disclosure and are provided as illustrative examples of the disclosure, not as restrictive descriptions. It is submitted with the understanding that they will not be used to limit the scope or meaning of the claims. In addition, in the Detailed Description, it can be seen that the description provides illustrative examples and the various features are grouped together in various implementations for the purpose of streamlining the disclosure. This method of disclosure is not to be interpreted as reflecting an intention that the claimed subject matter requires more features than are expressly recited in each claim. Rather, as the following claims reflect, inventive subject matter lies in less than all features of a single disclosed configuration or operation. The following claims are hereby incorporated into the Detailed Description, with each claim standing on its own as a separately claimed subject matter.

The claims are not intended to be limited to the aspects described herein, but is to be accorded the full scope consistent with the language claims and to encompass all legal equivalents. Notwithstanding, none of the claims are intended to embrace subject matter that fails to satisfy the requirement of 35 U.S.C. §101, 102, or 103, nor should they be interpreted in such a way.

## Claims

1. A mechanical gasket, comprising:
a unitary gasket body configured to be disposed over and coupled to an outlet, the unitary gasket body comprising a plurality of slots,
wherein the unitary gasket body has a predetermined gasket thickness and gasket dimensions that substantially correspond to a face of the outlet, such that when an electrical pronged connector is mated with the outlet the mechanical gasket is positioned between the outlet and the electrical pronged connector without inhibiting electrical conductivity between the outlet and the electrical pronged connector,
wherein each slot of the plurality of slots:
is configured to align with a corresponding receptacle of the outlet; and
has a predetermined slot width and a predetermined slot height selected to reduce one or more opening dimensions of the corresponding receptacle for receiving a corresponding metal prong of the electrical pronged connector when the electrical pronged connector is mated with the outlet.

2. The mechanical gasket of claim 1, wherein the predetermined gasket thickness is less than or equal to 2 millimeters.

3. The mechanical gasket of claim 1 or claim 2, wherein:
the predetermined slot width is less than or equal to 0.6 millimeters; and
the predetermined slot height is less than or equal to 5 millimeters.

4. The mechanical gasket of any one of claims 1-3, wherein each slot of the plurality of slots narrows as it traverses the unitary gasket body according to a predetermined draft angle.

5. The mechanical gasket of any one of claims 1-4, wherein the unitary gasket body couples to the outlet via an adhesive.

6. The mechanical gasket of any one of claims 1-5, wherein each slot of the mechanical gasket reduces the opening dimensions of the corresponding receptacle by at least 80 percent.

7. The mechanical gasket of any one of claims 1-6, wherein the unitary gasket body is formed using silicone.

8. The mechanical gasket of any one of claims 1-7, wherein the mechanical gasket is inert such that the mechanical gasket is only damaged when in contact with strong bases or strong acids and/or does not participate in biological processes when in human contact.

9. The mechanical gasket of any one of claims 1-8, wherein the mechanical gasket is electrically insulative.

10. The mechanical gasket of any one of claims 1-9, wherein the mechanical gasket includes hydrophobic properties.

11. A gasket stamp press, comprising:
a plunger body including:
a plunger configured to support a mechanical gasket and couple the mechanical gasket to a face of an outlet,
a plurality of spring-loaded support rods, and
a stamp member coupled to the plunger and the plurality of spring-loaded support rods;
a stamp housing including:
a plunger channel that is configured to receive the plunger, and
a plurality of rod openings that are configured to receive the plurality of spring-loaded support rods; and
wherein:
a first end of the stamp housing is configured to contact the outlet or an outlet mount and align the outlet with the plunger channel,
a second end of the stamp housing, opposite the first end of the stamp housing, is configured to receive the plunger body, and
while i) the first end of the stamp housing contacts the outlet and/or the outlet mount and ii) the plunger body is disposed, at least partially, within the stamp housing, application of a force at the stamp member causes the plunger to press the mechanical gasket against the outlet such that the mechanical gasket detaches from the plunger and couples to the face of the outlet.

12. The gasket stamp press of claim 11, wherein, when the force at the stamp member is removed, the plurality of spring-loaded support rods separate the plunger from the outlet.

13. The gasket stamp press of any one of claims 11-12, wherein the plunger channel has channel dimensions that are greater than or equal to an outline of the outlet.

14. The gasket stamp press of any one of claims 11-13, wherein the plunger is a first length and the plurality of spring-loaded support rods is a second length.

15. The gasket stamp press of any one of claims 11-14, wherein the plunger has a surface area substantially similar to dimensions of the mechanical gasket.

16. The gasket stamp press of any one of claims 11-15, wherein each support rod of the plurality of spring-loaded support rods includes a spring element.

17. The gasket stamp press of claim 16, wherein the spring element has a predetermined spring constant for returning the stamp member from a compressed position, while the force is applied, to an uncompressed position, when the force is removed.

18. The gasket stamp press of any one of claims 11-17, wherein the stamp member is a hand member.

19. The gasket stamp press of any one of claims 11-17, wherein the mechanical gasket comprises a unitary gasket body configured to be disposed over and coupled to an outlet, the unitary gasket body comprising a plurality of slots, wherein the unitary gasket body has a predetermined gasket thickness and gasket dimensions that substantially corresponds to a face of the outlet, such that when an electrical pronged connector is mated with the outlet the mechanical gasket is positioned between the outlet and the electrical pronged connector without inhibiting electrical conductivity between the outlet and the electrical pronged connector.

20. The gasket stamp press of claim 19, wherein each slot of the plurality of slots of the mechanical gasket is configured align with a corresponding receptacle of the outlet, and has a predetermined slot width and a predetermined slot height selected to reduce one or more opening dimensions of the corresponding receptacle for receiving a corresponding metal prong of the electrical pronged connector when the electrical pronged connector is mated with the outlet.
